# EUROPEAN PATENT APPLICATION

(11) **EP 4 726 316 A1**
(43) Date of publication of application: **15.04.2026**
(21) Application number: 25203321.2
(22) Date of filing: 19.09.2025
(51) Int. Cl.: F28D 20/02, F28F 3/06, F28F 9/02, F28F 9/22

(54) **HEAT EXCHANGER ASSEMBLIES FOR PHASE CHANGE MATERIAL**

(30) Priority: 14.10.2024 US 202463707033 P; 07.02.2025 US 202519048567
(71) Applicant: Honeywell International Inc., Charlotte, NC 28202 (US)
(72) Inventor: KESHAVARZ MOHAMMADIAN, Shahabeddin, Charlotte, 28202 (US); MAHDEREKAL, Isaac, Charlotte, 28202 (US); ESCOBEDO, David, Charlotte, 28202 (US)
(74) Representative: Haseltine Lake Kempner LLP

(57) **Abstract**

A heat exchanger assembly may include a heat exchanger stack including a plurality of tanks. Each tank of the plurality of tanks may define a tank chamber configured to house a phase change material. The heat exchanger stack may define a plurality of undulating flow paths. Each undulating flow path of the plurality of undulating flow paths may be configured to receive a working fluid between neighboring tanks of the plurality of tanks. A method may include stacking the plurality of tanks to form the heat exchanger stack.

## Description

### CROSS REFERENCE TO RELATED APPLICATIONS

The present application claims the benefit of U.S. Provisional Application Serial No. 63/707,033, filed October 14, 2024, which is incorporated herein by reference in entirety.

### TECHNICAL FIELD

The present disclosure relates to heat exchanger assemblies for phase change materials.

### BACKGROUND

Phase change materials (PCMs) are highly effective at absorbing and releasing thermal energy during their phase transitions, making them useful for temperature regulation across various applications. Among these, salt hydrates exhibit a high latent heat of fusion, which makes them suitable for managing high heat sources.

### SUMMARY

In general, the present disclosure describes heat exchanger assemblies configured to use phase change materials as working media. In some examples, heat exchanger assemblies according to the present disclosure are modular. For example, heat exchanger assemblies can be assembled with a different number of modular components to arrive at different heat exchange characteristics. In some examples, one or more components of heat exchanger assemblies may be replaceable, for example, by non-destructive separation and replacement of components. For example, heat exchanger assemblies may be formed without requiring permanent bonding or coupling processes such as welding or permanent adhesives, and one or more components can be separated from heat exchanger assemblies without affecting the integrity of the components or of heat exchanger assemblies as a whole.

In some examples, the present disclosure describes an example heat exchanger assembly including a heat exchanger stack. The heat exchanger stack may include a plurality of tanks. Each tank of the plurality of tanks may define a tank chamber configured to house a phase change material. The heat exchanger stack may define a plurality of undulating flow paths. Each undulating flow path of the plurality of undulating flow paths may be configured to receive a working fluid between neighboring tanks of the plurality of tanks.

In some examples, the present disclosure describes an example heat exchanger assembly including a heat exchanger stack, the heat exchanger stack including a plurality of tanks. The heat exchanger assembly may further include a heat exchanger housing defining a housing chamber. The heat exchanger stack is received in the housing chamber of the heat exchanger housing. Each tank of the plurality of tanks may define a tank chamber configured to house a phase change material. The heat exchanger stack may define a plurality of undulating flow paths. Each undulating flow path of the plurality of undulating flow paths is configured to receive a working fluid between neighboring tanks of the plurality of tanks. At least one major surface of each tank of the plurality of tanks may at least partially define the plurality of undulating flow paths. The heat exchanger housing may define a housing inlet and a housing outlet. The plurality of undulating flow paths fluidically couples the housing inlet to the housing outlet.

In some examples, the present disclosure describes an example method including stacking a plurality of tanks to form a heat exchanger stack of a heat exchanger assembly. Each tank of the plurality of tanks may define a tank chamber configured to house a phase change material. The heat exchanger stack may define a plurality of undulating flow paths. Each undulating flow path of the plurality of undulating flow paths may be configured to receive a working fluid between neighboring tanks of the plurality of tanks.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1A is a diagram showing a perspective view of an example heat exchanger assembly including a heat exchanger stack including a plurality of tanks.
FIG. 1B is a diagram showing a partial sectional view of the heat exchanger assembly of FIG. 1A.
FIG. 1C is a diagram showing a partially exploded view of the heat exchanger assembly of FIG. 1A.
FIG. 2 is a diagram showing a perspective view of the heat exchanger stack of the heat exchanger assembly of FIGS. 1A to 1C with the plurality of tanks defining a plurality of undulating flow paths therebetween.
FIG. 3A is a diagram showing a perspective view of an example tank of the assembly of FIGS. 1A to 1C.
FIG. 3B is a diagram showing a perspective view of an example tank portion of the tank of FIG. 3A.
FIG. 4 is a diagram showing a perspective view of an example flow frame configured to be positioned between neighboring tanks in the heat exchanger assembly of FIGS. 1A to 1C.
FIG. 5 is a diagram showing a perspective view of an example heat exchanger housing of the heat exchanger assembly of FIGS. 1A to 1C.
FIG. 6 is a diagram showing a perspective view of an example heat exchanger housing defining a plurality of fins configured to define undulating flow paths.
FIG. 7 is a diagram showing a perspective view of an example heat exchanger tank defining an undulating flow path.
FIG. 8 is a flowchart representing a method for forming the heat exchanger assembly of FIGS. 1A to 1C.
FIG. 9 is a chart illustrating a relationship between cooling power and duration of operation of an example heat exchanger assembly.
FIG. 10 is a chart illustrating a relationship between efficiency and flow rate during operation of an example heat exchanger assembly.

### DETAILED DESCRIPTION

In general, the disclosure describes heat exchanger assemblies configured to use phase change materials (PCM) as heat exchange materials. In some examples heat exchanger assemblies according to the present disclosure include modular, interchangeable, and/or reconfigurable components.

While salt hydrates may have thermal characteristics useful for heat exchange applications, their corrosive nature and low thermal conductivity present challenges. For example, corrosion-resistant materials such as stainless steel or Inconel may be used for constructing heat exchangers configured to use salt hydrates as phase change material. However, such materials may be expensive, dense, and time-consuming to fabricate, resulting in heavy products having a high cost. Additionally, stainless steel (~16 W/m·K) and Inconel (~15 W/m·K) have a significantly lower thermal conductivity compared to metals like aluminum (~237 W/m·K) and copper (~380 W/m·K).

Heat exchangers for PCMs may include structures such as stainless steel pillow tank designs. However, manufacturing such exchangers may be labor-intensive, involving extensive assembly (e.g., welding). Any issues during the welding process result in additional time and effort for correction, further complicating production. Additionally, since all the parts of the heat exchanger are welded together, inspecting, maintaining, and cleaning it in the future will be quite challenging.

In some examples, the present disclosure describes an example heat exchanger assembly including a heat exchanger stack. The heat exchanger stack may include a plurality of tanks. Each tank of the plurality of tanks may define a tank chamber configured to house a phase change material. The heat exchanger stack may define a plurality of undulating flow paths. Each undulating flow path of the plurality of undulating flow paths may be configured to receive a working fluid between neighboring tanks of the plurality of tanks.

Thus, separate PCM tanks (e.g., plate-shaped tanks) may be assembled to form the heat exchanger stack. These tanks may be fabricated using any suitable technique, for example, casting followed by machining to a predetermined size and shape. The tanks may be formed from any suitable material compatible with a predetermined PCM. In some examples, a tank may include a corrosion-resistant material (e.g., a metal or an alloy). In some examples, the tank may include a material having a higher thermal conductivity compared to stainless steel. The tanks may be modular (e.g., non-destructively separable or replaceable), allowing for easy inspection, maintenance, and cleaning.

Using modular tanks may streamline the manufacturing process for PCM heat exchangers. Using a corrosion-resistant material (e.g., an aluminum alloy) may allow a reduction in weight and size of a heat exchanger assembly. For example, while certain pillow tank PCM heat exchangers may be 5 mm thick, tanks according to the present disclosure may have a thickness of less than 5 mm, for example, 1.5 mm thick. Further, tanks including an aluminum alloy may reduce a heat exchanger assembly's weight by almost 10 times relative to steel (excluding the weight of PCM).

Heat exchanger assemblies according to the present disclosure may be formed with relatively lower costs and production time. Current PCM heat exchanger fabrication involves extensive welding, which is both costly and time-consuming. Reduced, little, or no welding may be required for forming heat exchanger assemblies according to the present disclosure, thereby lowering manufacturing time and costs. Furthermore, the heat exchanger assemblies are amenable to mass production and adaptable to various cooling capacities. For example, the cooling power of the heat exchanger by simply adjusting the number of tanks.

Another benefit of the new design is its ability to manage the rate of heat transfer over time. In conventional PCM heat exchangers, the rate of heat transfer tends to decrease exponentially as time progresses. However, heat exchangers according to the present disclosure may provide multiple pathways for heat transfer, allowing control and adjustment of the rate of heat transfer by controlling the flow rate in each pathway. Such a capability may help maintain more consistent heat transfer performance throughout the operation.

Furthermore, heat exchange assemblies according to the present disclosure facilitate inspection, maintenance, and cleaning of the PCM by easy access to all sections or components. For example, a PCM tanks may include two portions which may be secured together. Flow pathways for flow of fluid (outside tanks) that exchanges heat with PCM (retained within tanks) may be defined, or secured, to the sides of PCM tanks. Thus, all the sections of the PCM heat exchanger can be inspected, repaired, cleaned, and if necessary exchanged.

Various PCM materials may be used, based on the application. By knowing the required amount of PCM for each application as well as the required heat transfer rate, the size of the PCM tanks, the number of the PCM tanks, and the number and length of the flow pathways can be calculated.

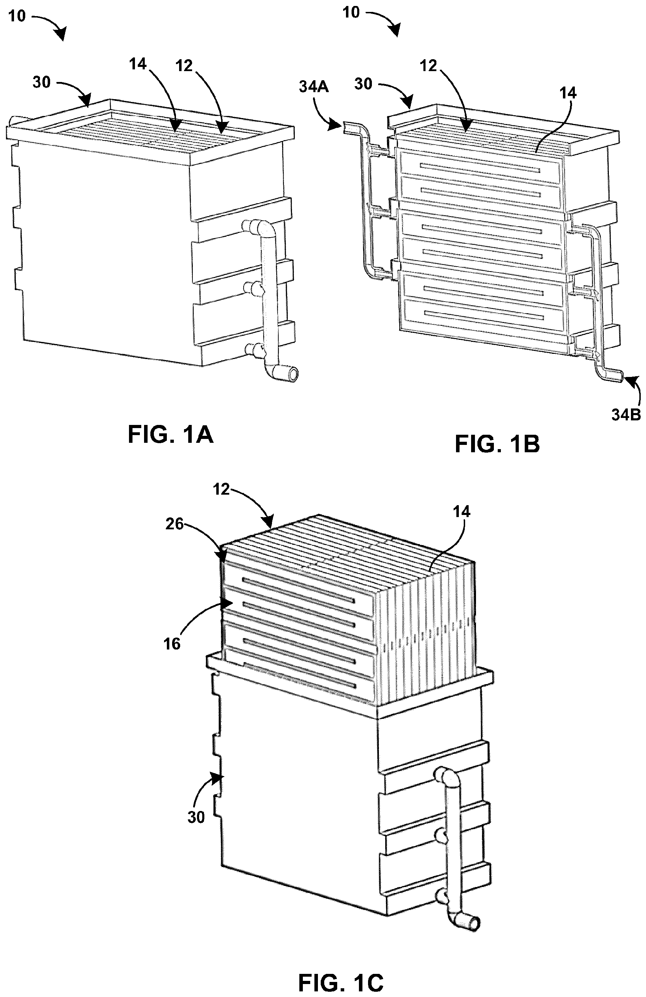

FIG. 1A is a diagram showing a perspective view of an example heat exchanger assembly 10 including a heat exchanger stack 12 including a plurality of tanks 14. FIG. 1B is a diagram showing a partial sectional view of heat exchanger assembly 10 of FIG. 1A. FIG. 1C is a diagram showing a partially exploded view of heat exchanger assembly 10 of FIG. 1A.

Heat exchanger stack 12 may define a plurality of undulating flow paths 16. Each undulating flow path of plurality of undulating flow paths 16 may be configured to receive a working fluid between neighboring tanks of plurality of tanks 14.

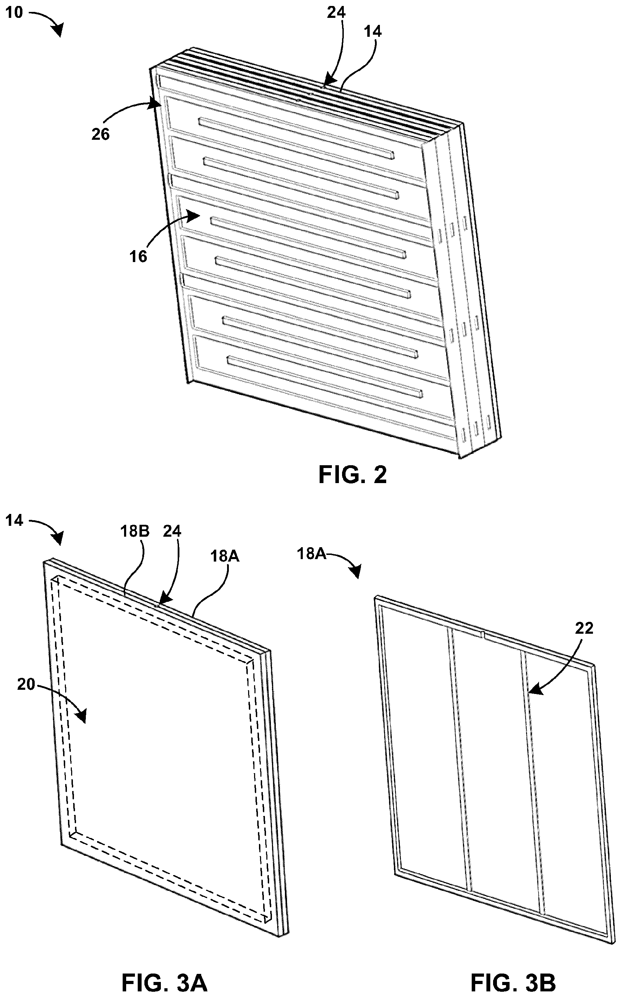

FIG. 2 is a diagram showing a perspective view of heat exchanger stack 12 of heat exchanger assembly 10 of FIGS. 1A to 1C with plurality of tanks 14 defining plurality of undulating flow paths 16 therebetween.

FIG. 3A is a diagram showing a perspective view of an example tank 14 of heat exchanger assembly 10 of FIGS. 1A to 1C. In some examples, tank 14 includes a first tank portion 18A and a second tank portion 18B facing and secured to first tank portion 18A. First tank portion 18A and second tank portion 18B may define a tank chamber 20 therebetween. Tank chamber 20 of one, more than one, or each tank of plurality of tanks 14 may define any suitable cross-section, for example, a rectangular cross-section in a plane along which the respective tank extends.

FIG. 3B is a diagram showing a perspective view of an example tank portion 18A of tank 14 of FIG. 3A. In some examples, second tank portion 18B may be identical to, but mirrored with, first tank portion 18A. In some examples, one or each of first tank portion 18A and second tank portion 18B may define at least one respective tank rib 22 facing tank chamber 20. While tank 14 may include two (or more) portions as shown in FIGS. 3A and 3B, in other examples, tank 14 may include or consist of a single (integral or continuous) portion.

Turning back to FIG. 1A, each tank of plurality of tanks 14 may define a respective tank chamber 20 configured to house a phase change material (PCM). The PCM may be any suitable material configured to absorb heat to change phase from a first phase to a second phase, or discharge heat to change phase from the second phase to the first phase. In some examples, the first phase is liquid and the second phase is vapor. In some examples, the first phase is solid and the second phase is liquid or vapor. For example, the phase change material may directly sublimate from solid to vapor phase, or convert from solid to vapor via an intermediate liquid phase. In some examples, the first phase is solid and the second phase is liquid. The PCM may include water, an aqueous solution, an oil, an organic composition, a wax, a gel, a paste, a solid, or any other suitable form of material.

In some examples, one, more than one, or each tank of plurality of tanks 14 is a cubic plate. For example, plurality of tanks 14 may each include a rectangular parallelopiped structure. However, any other suitable shape or form may be used.

Each tank of plurality of tanks 14 may be modular and non-destructively separable from heat exchanger stack 12. For example, respective tanks of plurality of tanks 14 may be held or assembled together without a permanent coupling or joining such as being without a weld or without a permanent adhesive. Respective tanks of plurality of tanks 14 may thus be separable from each other or from heat exchanger stack 12 without causing damage to or destruction of respective tanks (or of heat exchanger stack 12 or heat exchanger assembly 10 as a whole).

In some examples, each tank of plurality of tanks 14 may define a tank opening 24 configured to receive a PCM into tank chamber 20. Tank opening 24 may be circular, or have any other suitable shape. In some examples, tank opening 24 is sealed (e.g., with a temporary or permanent seal) after PCM is introduced into tank chamber 20. The seal may include a stopper, an adhesive, a rubber, a silicone, a metal, an alloy, a glass, a ceramic, or any suitable sealing material.

Plurality of tanks 14 may include any suitable material. In some examples, one, more than one, or each tank of the plurality of tanks 14 includes one or more of a metal, an alloy, a glass, a ceramic, or a plastic. For example, the alloy may include an aluminum alloy. In some examples, each tank of plurality of tanks 14 consists of or consists essentially of (e.g., excluding minor impurities) an alloy (e.g., an aluminum alloy).

Plurality of undulating flow paths 16 may be defined between neighboring tanks of plurality of tanks 14. In some examples, at least a portion of plurality of undulating flow paths 16 is defined by a surface of a tank of plurality of tanks 14, alone or in combination with another component.

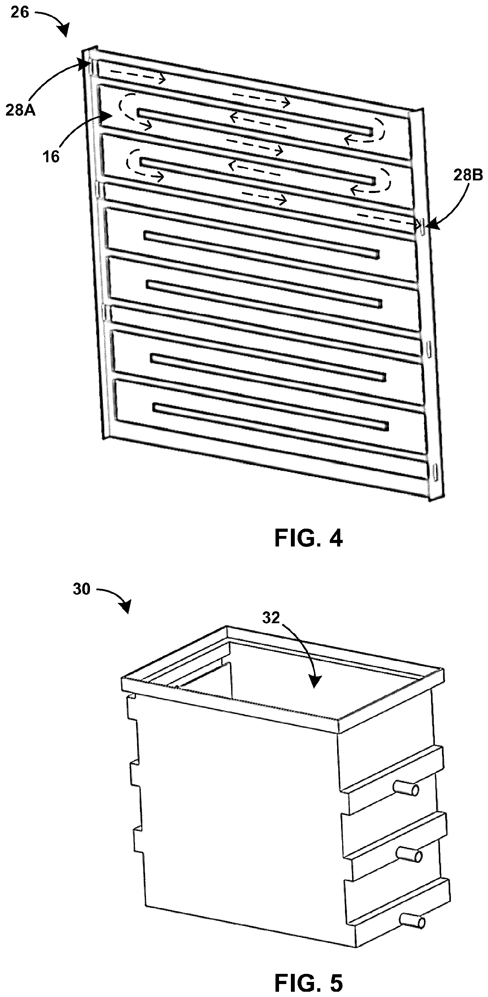

FIG. 4 is a diagram showing a perspective view of an example flow frame 26 configured to be positioned between neighboring tanks 14 in heat exchanger assembly 10 of FIGS. 1A to 1C. In some examples, heat exchanger stack 12 further includes a plurality of flow frames 26 interleaved with plurality of tanks 14. Each flow frame of plurality of flow frames 26 may define at least one undulating flow path of plurality of undulating flow paths 16.

Plurality of flow frames 26 may extend along a direction parallel to plurality of tanks 14. Plurality of flow frames 26 may be configured to be non-destructively separable from heat exchanger stack 12. For example, respective flow frames of plurality of flow frames 26 may be held or assembled together without a permanent coupling or joining (to each other or to tanks 14, or to some other component) such as being without a weld or without a permanent adhesive. Respective flow frames of plurality of flow frames 26 may thus be separable from each other or from heat exchanger stack 12 without causing damage to or destruction of respective flow frames (or of heat exchanger stack 12 or heat exchanger assembly 10 as a whole). At least one flow frame of plurality of flow frames 26 includes one or more of a metal, an alloy, a glass, a ceramic, or a plastic.

In some examples, each flow frame of plurality of flow frames 26 defines at least one frame inlet 28A and a frame outlet 28B. A respective undulating flow path of plurality of flow paths 16 may be fluidically coupled between frame inlet 28A and frame outlet 28B. In some examples, each flow frame defines a respective undulating flow path in contact with neighboring faces of neighboring tanks of plurality of tanks 14. Thus, a portion of a flow frame with a pair of tanks may define at least one undulating flow path. In some examples, a respective flow frame with a pair of tanks defines more than one undulating flow path, for example, three undulating flow paths as shown in FIG. 4 (top, middle, and bottom of flow frame 26 shown in FIG. 4).

One or more flow frames of plurality of flow frames 26 may be coextensive with neighboring tanks of plurality of tanks 14, or may extend to a smaller or greater area than that along which neighboring tanks extend. In some examples, a respective flow frame may include discrete flow frame portions, each flow frame portion defining a respective undulating flow path. In some such examples, a predetermined number of undulating flow paths may be achieved by combining a suitable number of frame portions between neighboring tanks.

FIG. 5 is a diagram showing a perspective view of an example heat exchanger housing 30 of heat exchanger assembly 10 of FIGS. 1A to 1C. Heat exchanger housing 30 may define a housing chamber 32. Heat exchanger stack 12 is received in housing chamber 32 of heat exchanger housing 30. Heat exchanger housing 30 may include any suitable material, for example, one or more of a metal, an alloy, a glass, a ceramic, or a plastic.

Heat exchanger housing 30 may define a housing inlet 34A and a housing outlet 34B. In some examples, plurality of undulating flow paths 16 fluidically couples housing inlet 34A to housing outlet 34B.

In some examples, at least a portion of plurality of undulating flow paths 16 may be defined by a housing.

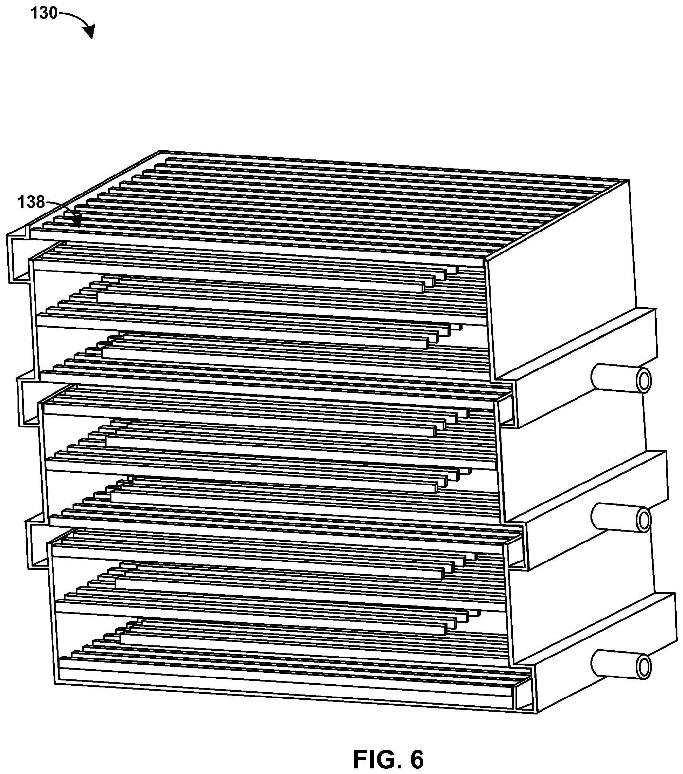

FIG. 6 is a diagram showing a perspective view of an example heat exchanger housing 130 defining a plurality of fins 138 configured to define undulating flow paths. For example, plurality of fins 138 may define undulating flow paths in combination with respective surfaces of tanks receiving in housing 130. In some such examples, no flow frames may be necessary or present to define the undulating flow paths.

In some examples, at least a portion of, or an entirety of, a plurality of undulating flow paths 16 may be defined by a tank.

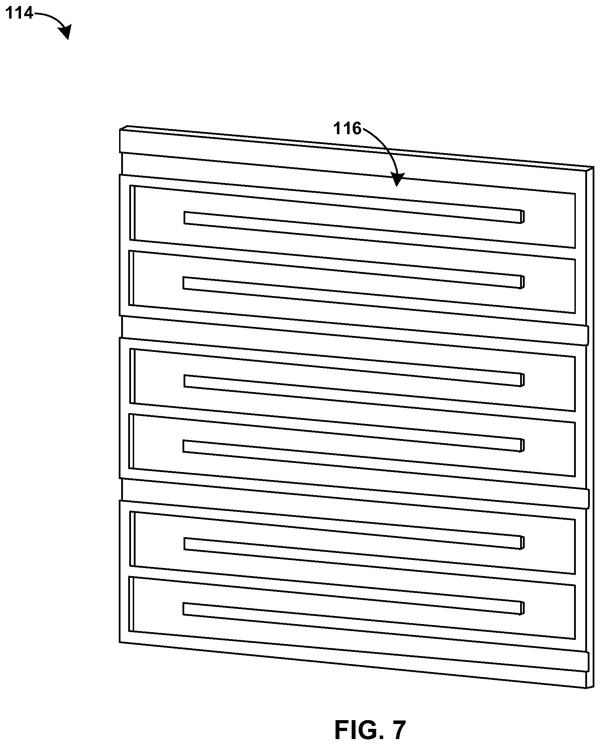

FIG. 7 is a diagram showing a perspective view of an example heat exchanger tank 114 defining an undulating flow path 116. Heat exchanger tank 114 may be substantially similar to tank 14 in material and/or construction, but differ in defining a plurality of undulating flow paths 116 (e.g., at a surface of heat exchanger tank 114). For example, plurality of undulating flow paths 116 may be stamped, machined, molded, or additively manufactured integral with a body of heat exchanger tank 114. In some examples, a frame (e.g., similar to flow frame 26) may be separately formed and temporarily or permanently secured to a body of heat exchanger tank 114 to form plurality of undulating flow paths 116 defined by heat exchanger tank 114 as a whole. Thus, at least one major surface of one, more than one, or each tank of a plurality of tanks 114 may at least partially define plurality of undulating flow paths 116.

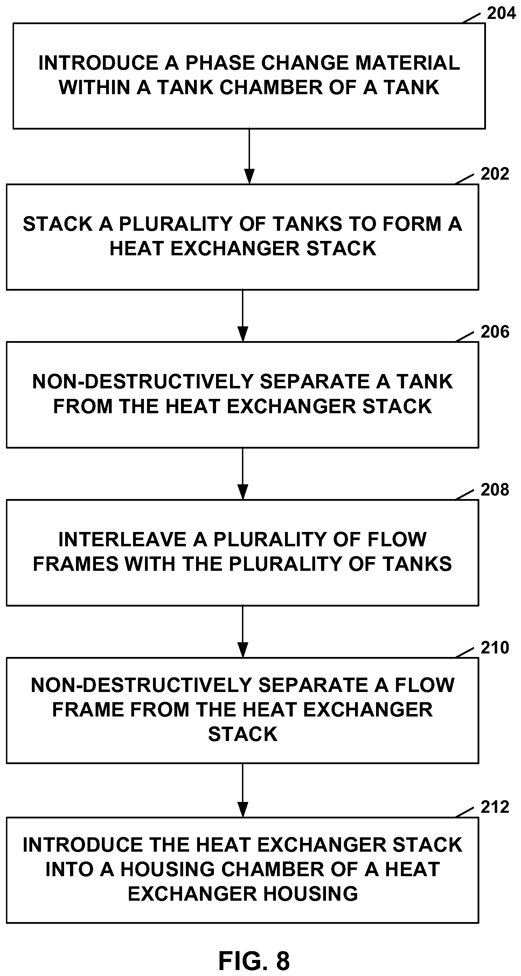

FIG. 8 is a flowchart representing a method for forming the heat exchanger assembly of FIGS. 1A to 1C. However, the method of FIG. 8 may be used to form any heat exchanger assembly according to the present disclosure, and any suitable method may be used to form any heat exchanger assembly according to the present disclosure.

In some examples, a method includes stacking plurality of tanks 14 to form heat exchanger stack 12 of heat exchanger assembly 10 (202). Each tank of plurality of tanks 14 may define tank chamber 20 configured to house a PCM. Heat exchanger stack 12 may define plurality of undulating flow paths 16. Each undulating flow path of the plurality of undulating flow paths 16 may be configured to receive a working fluid between neighboring tanks of plurality of tanks 14.

The method may further include introducing the PCM into respective tanks of the plurality of tanks 14 (204). Introducing the PCM may be performed before, during, or after the stacking (202). In some examples, PCM may be introduced within respective tank chambers 20 via tank openings 24. In some examples, respective tank openings 24 may be sealed after PCM is introduced into respective tank chambers 20.

The method may further include non-destructively separating at least one tank of plurality of tanks 14 from heat exchanger assembly 10 (e.g., from heat exchanger stack 12) (206). For example, one or more tanks may be removed and/or replaced during assembly, inspection, or maintenance.

The method may further include interleaving plurality of flow frames 26 with plurality of tanks 14 (208). Each flow frame of plurality of flow frames 26 may at least partially define at least one undulating flow path of plurality of flow paths 16.

The method may further include non-destructively separating at least one flow frame of plurality of flow frames 26 from heat exchanger assembly 10 (e.g., from heat exchanger stack 12) (210). For example, one or more flow frames may be removed and/or replaced during assembly, inspection, or maintenance.

The method may further include introducing heat exchanger stack 12 into housing chamber 32 defined by heat exchanger housing 30 (212). In some examples, this step may be reversible. For example, heat exchanger stack 12 may be removable from housing chamber 32 defined by heat exchanger housing 30 during assembly, inspection, or maintenance.

### EXAMPLES

### COMPARATIVE EXAMPLE 1

A liquid cooled phase change material (PCM) heat exchanger (HX) system was built. This HX featured a three-way flow system for the working fluid, which passed through tanks filled with PCM. The PCM filled certain tanks (PCM tanks), and fins within a housing directed the flow of the working fluid through these tanks. The fluid entered through the inlet manifolds, which guided it along the paths created by the fins, ensuring prolonged and efficient contact between the PCM tanks and the fluid. Once the fluid traversed this path, it was collected at the outlet manifolds and exited the HX.

After the HX housing was formed by 3D printing (similar to housing 130 described with reference to FIG. 6), appropriately sized PCM tanks (ice packs) were integrated into the structure. Within each ice pack, a layer of cellulose sponge was sandwiched between two aluminum plates to ensure a more uniform distribution of water/ice throughout the pack.

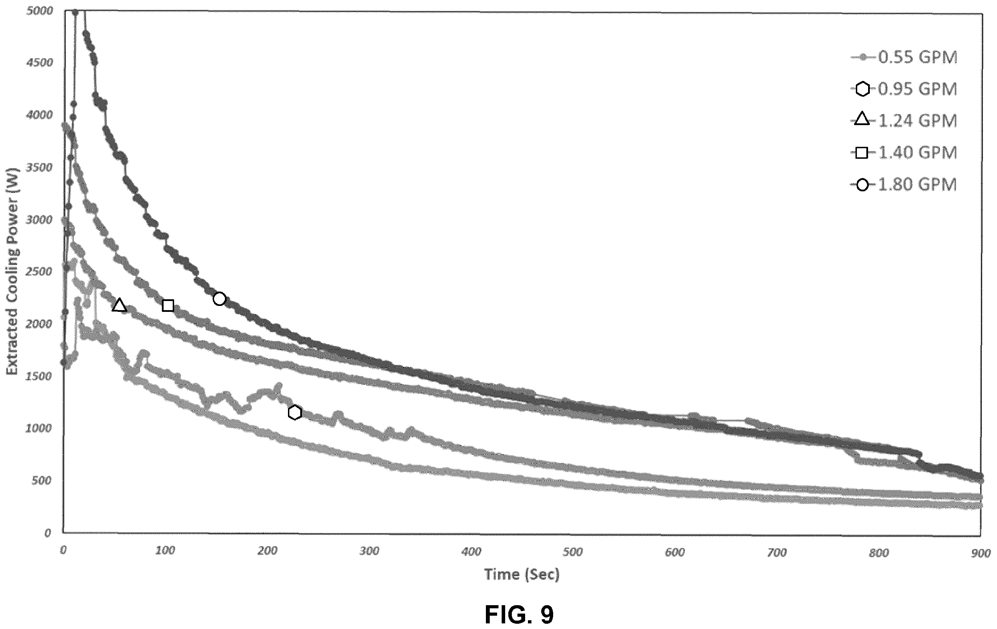

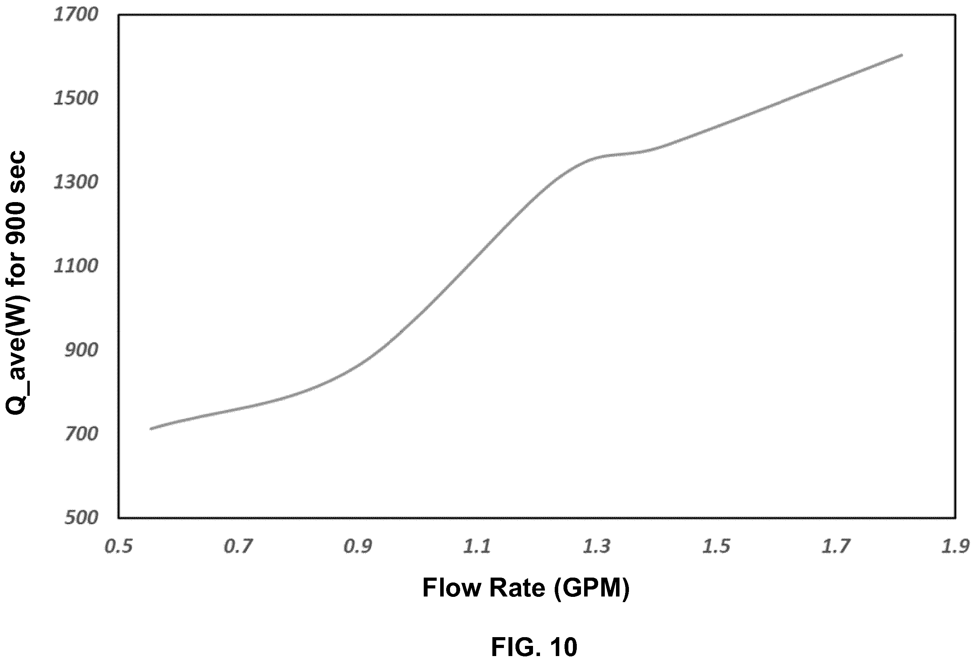

Once all components were assembled, the liquid-PCM heat exchanger was placed in a refrigerator to freeze the water inside. Subsequently, it was installed onto an experimental setup along with a cooling/heating bath to evaluate the heat exchanger's performance and gather data, including inlet and outlet flow temperatures, pressures, and volumetric flow rate. FIGS. 9 and 10 illustrate the obtained results. FIG. 9 is a chart illustrating a relationship between cooling power and duration of operation of an example heat exchanger assembly. FIG. 10 is a chart illustrating a relationship between efficiency and flow rate during operation of an example heat exchanger assembly.

The shape of the ice packs (PCM tanks) prevented filling them with the intended amount of water (PCM). Additionally, leakage from the sides of the ice packs compromised the efficiency of the HX.

The following enumerated clauses describe examples according to the present disclosure.

Clause 1: A heat exchanger assembly including: a heat exchanger stack, the heat exchanger stack including a plurality of tanks, where each tank of the plurality of tanks defines a tank chamber configured to house a phase change material, and where the heat exchanger stack defines a plurality of undulating flow paths, each undulating flow path of the plurality of undulating flow paths being configured to receive a working fluid between neighboring tanks of the plurality of tanks.

Clause 2: The heat exchanger assembly of clause 1, where each tank of the plurality of tanks is a cubic plate.

Clause 3: The heat exchanger assembly of clauses 1 or 2, where each tank of the plurality of tanks is modular and non-destructively separable from the heat exchanger stack.

Clause 4: The heat exchanger assembly of any of clauses 1 to 3, where each tank of the plurality of tanks defines a tank opening configured to receive a phase change material into the tank chamber.

Clause 5: The heat exchanger assembly of any of clauses 1 to 4, where the tank chamber of each tank of the plurality of tanks defines a rectangular cross-section in a plane along which the respective tank extends.

Clause 6: The heat exchanger assembly of any of clauses 1 to 5, where each tank of the plurality of tanks includes a first tank portion and a second tank portion facing and secured to the first tank portion, where the first tank portion and the second tank portion define the tank chamber therebetween.

Clause 7: The heat exchanger assembly of clause 6, where each of the first tank portion and the second tank portion define at least one respective tank rib facing the tank chamber.

Clause 8: The heat exchanger assembly of any of clauses 1 to 7, where each tank of the plurality of tanks includes a metal or an alloy.

Clause 9: The heat exchanger assembly of clause 8, where the alloy includes an aluminum alloy.

Clause 10: The heat exchanger assembly of any of clauses 1 to 9, where at least one major surface of each tank of the plurality of tanks at least partially defines the plurality of undulating flow paths.

Clause 11: The heat exchanger assembly of any of clauses 1 to 10, where the heat exchanger stack further includes a plurality of flow frames interleaved with the plurality of tanks, each flow frame of the plurality of flow frames defining at least one undulating flow path of the plurality of flow paths.

Clause 12: The heat exchanger assembly of clause 11, where the plurality of flow frames extends along a direction parallel to the plurality of tanks.

Clause 13: The heat exchanger assembly of clause 12, where the plurality of flow frames is configured to be non-destructively separable from the heat exchanger assembly.

Clause 14: The heat exchanger assembly of any of clauses 11 to 13, where at least one flow frame of the plurality of flow frames includes one or more of a metal, an alloy, a plastic, or a ceramic.

Clause 15: The heat exchanger assembly of any of clauses 1 to 14, further including a heat exchanger housing defining a housing chamber, where the heat exchanger stack is received in the housing chamber of the heat exchanger housing.

Clause 16: The heat exchanger assembly of clause 15, where the heat exchanger housing defines a plurality of fins extending through the housing chamber, where the plurality of fins defines the plurality of undulating flow paths.

Clause 17: The heat exchanger assembly of clauses 15 or 16, where the heat exchanger housing defines a housing inlet and a housing outlet, where the plurality of undulating flow paths fluidically couples the housing inlet to the housing outlet.

Clause 18: A heat exchanger assembly including: a heat exchanger stack, the heat exchanger stack including a plurality of tanks; and a heat exchanger housing defining a housing chamber, where the heat exchanger stack is received in the housing chamber of the heat exchanger housing, where each tank of the plurality of tanks defines a tank chamber configured to house a phase change material, where the heat exchanger stack defines a plurality of undulating flow paths, each undulating flow path of the plurality of undulating flow paths being configured to receive a working fluid between neighboring tanks of the plurality of tanks, where at least one major surface of each tank of the plurality of tanks at least partially defines the plurality of undulating flow paths, where the heat exchanger housing defines a housing inlet and a housing outlet, and where the plurality of undulating flow paths fluidically couples the housing inlet to the housing outlet.

Clause 19: A method including: stacking a plurality of tanks to form a heat exchanger stack of a heat exchanger assembly, where each tank of the plurality of tanks defines a tank chamber configured to house a phase change material, and where the heat exchanger stack defines a plurality of undulating flow paths, each undulating flow path of the plurality of undulating flow paths being configured to receive a working fluid between neighboring tanks of the plurality of tanks.

Clause 20: The method of clause 19, further including introducing the phase change material into respective tanks of the plurality of tanks.

Clause 21: The method of clauses 19 or 20, further including non-destructively separating at least one tank of the plurality of tanks from the heat exchanger assembly.

Clause 22: The method of any of clauses 19 to 21, further including interleaving a plurality of flow frames with the plurality of tanks, where each flow frame of the plurality of flow frames at least partially defines at least one undulating flow path of the plurality of flow paths.

Clause 23: The method of clause 22, further including non-destructively separating at least one flow frame of the plurality of flow frames from the heat exchanger assembly.

Clause 24: The method of any of clauses 19 to 23, further including introducing the heat exchanger stack into a housing chamber defined by a heat exchanger housing.

Various examples have been described. These and other examples are within the scope of the following claims.

## Claims

1. A heat exchanger assembly comprising:
a heat exchanger stack, the heat exchanger stack comprising a plurality of tanks,
wherein each tank of the plurality of tanks defines a tank chamber configured to house a phase change material, and
wherein the heat exchanger stack defines a plurality of undulating flow paths, each undulating flow path of the plurality of undulating flow paths being configured to receive a working fluid between neighboring tanks of the plurality of tanks.

2. The heat exchanger assembly of claim 1, wherein each tank of the plurality of tanks is a cubic plate.

3. The heat exchanger assembly of any one of claims 1 or 2, wherein each tank of the plurality of tanks is modular and non-destructively separable from the heat exchanger stack.

4. The heat exchanger assembly of any one of claims 1 to 3, wherein each tank of the plurality of tanks defines a tank opening configured to receive a phase change material into the tank chamber.

5. The heat exchanger assembly of any one of claims 1 to 4, wherein the tank chamber of each tank of the plurality of tanks defines a rectangular cross-section in a plane along which the respective tank extends.

6. The heat exchanger assembly of any one of claims 1 to 5, wherein each tank of the plurality of tanks comprises a first tank portion and a second tank portion facing and secured to the first tank portion, wherein the first tank portion and the second tank portion define the tank chamber therebetween.

7. The heat exchanger assembly of claim 6, wherein each of the first tank portion and the second tank portion define at least one respective tank rib facing the tank chamber.

8. The heat exchanger assembly of any one of claims 1 to 7, wherein each tank of the plurality of tanks comprises a metal or an alloy.

9. The heat exchanger assembly of claim 8, wherein the alloy comprises an aluminum alloy.

10. The heat exchanger assembly of any one of claims 1 to 9, wherein at least one major surface of each tank of the plurality of tanks at least partially defines the plurality of undulating flow paths.

11. The heat exchanger assembly of any one of claims 1 to 10, wherein the heat exchanger stack further comprises a plurality of flow frames interleaved with the plurality of tanks, each flow frame of the plurality of flow frames defining at least one undulating flow path of the plurality of flow paths.

12. The heat exchanger assembly of any one of claims 1 to 11, further comprising a heat exchanger housing defining a housing chamber, wherein the heat exchanger stack is received in the housing chamber of the heat exchanger housing.

13. The heat exchanger assembly of claim 12, wherein the heat exchanger housing defines a plurality of fins extending through the housing chamber, wherein the plurality of fins defines the plurality of undulating flow paths.

14. A heat exchanger assembly comprising:
a heat exchanger stack, the heat exchanger stack comprising a plurality of tanks; and
a heat exchanger housing defining a housing chamber, wherein the heat exchanger stack is received in the housing chamber of the heat exchanger housing,
wherein each tank of the plurality of tanks defines a tank chamber configured to house a phase change material,
wherein the heat exchanger stack defines a plurality of undulating flow paths, each undulating flow path of the plurality of undulating flow paths being configured to receive a working fluid between neighboring tanks of the plurality of tanks,
wherein at least one major surface of each tank of the plurality of tanks at least partially defines the plurality of undulating flow paths,
wherein the heat exchanger housing defines a housing inlet and a housing outlet, and
wherein the plurality of undulating flow paths fluidically couples the housing inlet to the housing outlet.

15. A method comprising:
stacking a plurality of tanks to form a heat exchanger stack of a heat exchanger assembly,
wherein each tank of the plurality of tanks defines a tank chamber configured to house a phase change material, and
wherein the heat exchanger stack defines a plurality of undulating flow paths, each undulating flow path of the plurality of undulating flow paths being configured to receive a working fluid between neighboring tanks of the plurality of tanks.
